(19) **Europäisches Patentamt**

**European Patent Office**

**Office européen des brevets**

(11) **EP 0 974 823 A2**

(12) **EUROPÄISCHE PATENTANMELDUNG**

(43) Veröffentlichungstag:
26.01.2000 Patentblatt 2000/04

(51) Int. Cl.⁷: **G01L 3/12**, G01L 5/22

(21) Anmeldenummer: **99113911.4**

(22) Anmeldetag: **16.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.07.1998 DE 19833359**

(71) Anmelder:
**Mannesmann VDO Aktiengesellschaft
60388 Frankfurt am Main (DE)**

(72) Erfinder:
• **Gutjahr, Jörg, Prof.Dr.
51588 Nümbrecht (DE)**
• **Porth, Wolfgang
60388 Frankfurt (DE)**
• **Gier, Lothar, Dr.
61231 Bad Nauheim (DE)**

(74) Vertreter:
**Rassler, Andrea, Dipl.-Phys.
Kruppstrasse 105
60388 Frankfurt (DE)**

(54) **Drehmomentsensor**

(57) Es wird ein Drehmomentsensor (1) angegeben, mit einem Gehäuse (14), das eine Lichtquelle (15) aufweist, und einer Meßwelle (3), die eine Signalgeberanordnung einer Drehwinkelerfassungseinrichtung mit einer Verarbeitungseinrichtung (18) aufweist.

Man möchte ein Drehmoment auch bei drehender Welle auf einfache Art ermitteln können.

Hierzu ist die Drehwinkelerfassungseinrichtung (9,13) gemeinsam mit der Meßwelle (3) gegenüber dem Gehäuse (14) drehbar angeordnet und die Verarbeitungseinrichtung (18) weist eine opto-elektrische Ernergieversorgungseinrichtung auf.

Fig.1

**Beschreibung**

Die Erfindung betrifft einen Drehmomentsensor mit einem Gehäuse, das eine Lichtquelle aufweist, und einer Maßwelle, die eine Signalgeberanordnung einer Drebwinkelerfassungseinrichtung mit einer Verarbeitungseinrichtung aufweist.

Ein derartiger Drehmomentsensor ist aus EP 0 555 987 B1 bekannt. Der bekannte Drehmomentsensor wird in einer hilfskraftunterstützten Fahrzeuglenkung eingesetzt. Er ist zwischen einem Lenkhandrad und einem Lenkgetriebe angeordnet. Auf die gelenkten Räder wirkt ein Motor, der so angesteuert wird, daß das vom Drehmomentsensor ermittelte Drehmoment möglichst klein wird. Die Meßwelle ist hierbei als Torsionswelle ausgebildet, d. h. sie verdreht oder verwindet sich etwas, wenn eine Kraft am Lenkhandrad aufgebracht wird. Die Signalgeberanordnung arbeitet optisch. Sie weist zwei Blendenscheiben auf, die bei Auftreten eines Drehmoments gegeneinander verdreht werden. Eine Empfäugeranordnung ist ebenfalls gedurch die Blendenanordnung einen mehr oder weniger großen Lichtstrom und gibt dementsprechend einen mehr oder weniger großen Signalstrom ab, aus dem dann das auf die Meßwelle wirkende Drehmoment berechnet werden kann.

Ein anderer Drehmomentsensor ist aus EP 0 765 795 A2 bekannt. Auch dieser Drehmomentsensor ermittelt die relative Position der beiden Enden der Meßwelle, und zwar mit Hilfe von Übertragern, die in unterschiedlichen Spulen unterschiedliche Spannungen induzieren.

Probleme entstehen bei derartigen Drehmomentsensoren dann, wenn sie das Drehmoment an einer drehbaren Welle ermitteln sollen. Dies ist aber bei einer Lenkwelle in der Regel der Fall. Zwischen den beiden extremen Stellungen der gelenkten Räder muß das Lenkrad mehrere Umdrehungen beschreiben.

Aus diesem Grunde ist in der erstgenannten Druckschrift lediglich die Elendenanordnung verdrehbar. Die Lichtquelle und die Empfängeranordnung sind gehäusefest. Dies erfordert einen relativ komplizierten Aufbau.

Für die Übertragung von elektrischen Signalen mit Hilfe von Übertragern sind relativ große Amplituden erforderlich, die ebenfalls einen komplizierten Aufbau bedingen.

Der Erfindung liegt die Aufgabe zugrunde, ein Drehmoment auch bei drehenden Wellen auf einfache Art ermitteln zu können.

Diese Ausgabe wird bei einem Drehmomentsensor der eingangs genannten Art dadurch gelöst, daß die Drehwinkelerfassungseinrichtung gemeinsam mit der Meßwelle gegenüber dem Gehäuse drehbar angeordnet ist und die Verarbeitungseinrichtung eine optoelektrische Energieversorgungseinrichtung aufweist.

Bei dieser Ausgestaltung gestattet man, daß die gesamte Drehwinkelerfassungseinrichtung ortsfest relativ zu der Meßwelle angeordnet ist. Dementsprechend kann die gesamte Auswertung der Drehwinkelerfassung an der Meßwelle direkt erfolgen. Die Gefahr, daß Störungen in die Signale eingestreut werden, ist relativ gering. Die elektrische Energie, die notwendig ist, um die Verarbeitungseinrichtung zu betreiben, wird auf optischem Weg zugeführt. Die Energieversorgungseinrichtung wandelt den auftreffenden Lichtstrom in eine elektrische Spannung um und bereitet diese Spannung gegebenenfalls auf. Da für die Signalverarbeitung in der Drehwinkelerfassungseinrichtung in der Regel keine größeren elektrischen Energien erforderlich sind, reicht die optisch mit Hilfe von Licht übertragene Energie vollkommen aus.

Vorzugsweise ist ein Ende der Meßwelle mit einem ersten Träger verbunden, der eine optische Detektoranordnung aufweist, und das andere Ende der Meßwelle ist mit einem zweiten Träger verbunden, der eine Blendenanordnung aufweist, wobei der zweite Träger zwischen dem ersten Träger und der Lichtquelle angeordnet ist. Wenn ein Drehmoment aufgebracht wird, dann verwindet sich die Meßwelle etwas. Dementsprechend verschieben sich die beiden Träger relativ zueinander. Die Blendenanordnung, die zwischen der Lichtquelle und dem ersten Träger angeordnet ist, schattet dementsprechend gewisse Bereiche der optischen Detektoranordnung ab und gibt andere frei. Man kann auf diese Weise ein Differenzsignal gewinnen, das eine verbesserte Bestimmung der relativen Verschiebung der beiden Träger zueinander (in Umfangsrichtung) erlaubt. Besonders vorteilhaft ist dabei, daß die gleiche Lichtquelle, die zur Gewinnung des Positionssignals verwendet wird, auch zum Zuführen der elektrischen Energie verwendet werden kann. Dies vereinfacht den Aufbau.

Vorzugsweise weist der zweite Träger auf seiner der Lichtquelle zugewandten Seite eine photovoltaische Anordnung auf. Eine photovoltaische Anordnung kann beispielsweise durch sogenannte "Solarzellen" gebildet werden, die auftreffendes Licht unmittelbar in elektrische Energie umwandeln. Dementsprechend sind keine weiteren Umformungsschritte, beispielsweise über eine Wärme-Kraft-Kopplung, erforderlich. Die Solarzellen können beispielsweise durch photoelektrische Halbleiter gebildet werden.

Mit Vorteil ist das Spektrum der Lichtquelle an die Empfindlichkeit der photovoltaischen Anordnung angepaßt. Damit erreicht man eine hohe Effizienz.

Bevorzugterweise ist die Blendenanordnung durch mindestens eine Durchbrechung der photovoltaischen Anordnung und ihres Trägers gebildet. Man kann dementsprechend die gesamte Fläche des Trägers ausnutzen, um die entsprechenden Solarzellen unterzubringen. Je größer die Fläche ist, die zum Lichtempfang zur Verfügung steht, desto mehr Energie kann auf die photovoltaische Anordnung und damit an die Energieversorgungseinrichtung übertragen werden.

Vorzugsweise weist die Verarbeitungseinrichtung einen Sender auf, der über eine leitungslose Strecke mit einem Empfänger im Gehäuse zusammenwirkt. Damit kann die Meßwelle frei rotieren, ohne durch irgendwelche Leitungen mit dem Gehäuse verbunden zu sein. Es existiert allenfalls eine Leitung zwischen den beiden Trägern. Da die Relativbewegung zwischen diesen beiden Trägern sehr klein ist und sich im Bereich ein Grad bewegt, läßt sich hier aber noch mit einer flexiblen Leitung arbeiten. Im übrigen wird auch das mehrfache Drehen der Meßwelle durch Leitungen nicht behindert.

Vorzugsweise ist die leitungslose Strecke als optische Übertragungsstrecke ausgebildet. Eine optische Übertragungsstrecke hat den Vorteil, daß sie gegen Störungen, die von außen eingestreut werden könnten, relativ unempfindlich ist. Eine derartige Störsicherheit sollte aber gerade bei einem Kraftfahrzeug gegeben sein.

Vorzugsweise ist die optische Übertragungsstrecke auf der der Lichtquelle abgewandten Seite des ersten Trägers angeordnet. Die optische Übertragungsstrecke ist damit gegenüber der Lichtquelle abgeschattet. Dies gestattet es, die optische Übertragungsstrecke mit einer relativ hohen Empfindlichkeit zu versehen.

Mit Vorteil weist die optische Übertragungsstrecke mehrere um die Welle herum verteilte Empfängerelemente auf. Man kommt dann mit einem oder jedenfalls wenigen Sendern aus und erreicht trotzdem für jeden Drehwinkel der Meßwelle eine zuverlässige Übertragung der Drehmoment-Signalwerte.

Hierbei ist besonders bevorzugt, daß der Sender ein frequenzanaloges, pulsweitenmoduliertes oder Trägerfrequenz-Signal oder ein anderes, amplitudenunabhängiges Signal aussendet. Ein derartiges Signal, dessen Information nicht in der Amplitude, sondern in anderen Größen steckt, kann mit einer hohen Zuverlässigkeit übertragen werden, wobei der jeweilige Abstand des Senders vom nächsten Empfängerelement keine Rolle spielt. Auch wird der Einfluß von Störlicht, das beispielsweise von der Lichtquelle stammen kann, klein gehalten.

Vorzugsweise arbeitet die Lichtquelle getaktet. Dies vermindert zwar die übertragbare Leistung, was bei einer entsprechend groß ausgebildeten Energieversorgungseinrichtung aber in Kauf genommen werden kann. Man erhält auf diese Weise aber den Vorteil, daß man Störgrößen mit einer relativ hohen Zuverlässigkeit ausfiltern kann. Das von der optischen Detektoranordnung ermittelte Signal bzw. die ermittelten Signale enthalten in der Regel einen Nutzanteil, der von der Freigabe oder Abschattung durch die Blendenanordnung abhängig ist, und einen Störanteil. Der Störanteil kann durch Streulicht, durch parasitäre Ströme oder durch alterungsbedingte Veränderungen an den Bauelementen hervorgerufen werden. Der Störanteil ist unabhängig von der Freigabe oder Abschattung des Photodetektors durch die Blendenanordnung. Er bleibt also auch dann gleich, wenn die Lichtquelle ihre Lichtintensität verändert. Wenn man daher die Signale des optischen Detektors in unterschiedlichen Phasen eines Taktes miteinander vergleicht, dann kann man die entsprechenden Störanteile eliminieren.

Dies ist in einer besonders einfach ausgestalteten Ausführung dann der Fall, wenn die Lichtquelle in einem Abschnitt einer jeden Periode kein Licht aussendet. In diesem Fall entsteht in diesem Abschnitt nur das Störsignal, das dann in einem nachfolgenden Abschnitt aus den zusammengesetzten Stör- und Nutzsignalen wieder entfernt werden kann.

In einer besonders bevorzugten Ausgestaltung ist vorgesehen, daß die Meßwelle von einer Hohlwelle umgeben ist, die einen der beiden Träger trägt, wobei der andere Träger kreissegmentförmig ausgebildet ist und durch einen entsprechenden Schlitz in der Wand der Hohlwelle ragt. Dies hat den Vorteil, daß die Hohlwelle auf beiden Seiten der Meßwelle abgestützt werden kann. Die Bewegung der Hohlwelle gegenüber der Meßwelle beschränkt sich dann auf ein reines Verdrehen. Dementsprechend ergeben sich auch keine anderen Verschiebungen der beiden Träger relativ zueinander. Dadurch, daß der eine Träger kreissegmentförmig ausgebildet ist, kann er durch den Schlitz in der Hohlwelle herausragen, ohne die Hohlwelle übermäßig zu schwächen.

Hierbei ist besonders bevorzugt, daß durch das Ende der Meßwelle, das nicht mit der Hohlwelle verbunden ist, ein Stift geführt ist, der auch in die Hohlwelle eingesteckt ist, wobei der Stift in einem der beiden Teile Meßwelle und Hohlwelle gehalten ist und die Öffnung im anderen der beiden Teile größer als der Querschnitt des Stiftes ist. Der Stift erlaubt also eine relative Verdrehung der Hohlwelle gegenüber der Meßwelle. Die Öffnung muß lediglich so groß sein, daß der Stift bei den maximal zulässigen Drehmomenten das die Öffnung enthaltende Teil nicht berührt. Sollte das Moment aber größer werden, dann sichert der Stift dagegen, daß dieses größere Moment auch auf die Meßwelle wirkt. Der Stift bildet also eine Überlastsicherung. Die Bezeichnung "Stift" ist hierbei ein Kürzel für ein Element, das die beschriebene Funktion erfüllt. Es kann sich also tatsächlich um einen beispielsweise zylinderförmigen Stab handeln. Es kann aber auch eine Art Zahnkranzanordnung vorgesehen sein, bei der die Meßwelle und die Hülse jeweils Zahnkränze aufweisen, die auf Lücke ineinandergreifen und mit entsprechendem Spiel versehen sind, um so die angreifenden Kräfte über den gesamten Umfang aufzunehmen.

Die Erfindung wird im folgenden anhand eines bevorzugten Ausführungsbeispiels in Verbindung mit der Zeichnung beschrieben. Hierin zeigen:

Fig. 1    eine schematische Seitenansicht eines Drehmomentsensors,

Fig. 2    eine schematische Ansicht zur Erläuterung der Drehmomentermittlung,

Fig. 3    eine schematische Stirnseitenansicht des Drehmomentsensors von Fig. 1.

Ein Drehmomentsensor 1 dient zur Ermittlung eines Drehmoments an einer Lenkwelle. Ein Abschnitt 2 der Lenkwelle, der mit einem nicht näher dargestellten Lenkhandrad verbunden ist, ist über eine Meßwelle 3, die als Torsionswelle ausgebildet ist, mit einem zweiten Abschnitt 4 verbunden, der mit einem nicht näher dargestellten Lenkgetriebe verbunden ist. Wenn der Abschnitt 2 der Lenkwelle gedreht wird, dann überträgt die Meßwelle 3 das entsprechende Drehmoment auf den Abschnitt 4, der sich entsprechend dreht. Wenn die gelenkten Räder von einer Extremposition zur anderen bewegt werden sollen, dann sind hierfür in der Regel zwischen drei und acht Umdrehungen der Lenkwelle notwendig.

Am Abschnitt 4 der Lenkwelle ist eine Hülse 5 betestigt, die als Hohlwelle ausgebildet ist. Im hohlen Innenraum 6 der Hülse 5 ist die Meßwelle 3 angeordnet. Die Meßwelle 3 weist gegenüber den beiden Abschnitten 2, 4 einen verminderten Durchmesser auf. Die Hülse 5 erstreckt sich über die gesamte Länge der Meßwelle 3 und ist am Abschnitt 2 der Lenkwelle mit Hilfe von Lagern 7 auf der Lenkwelle abgestützt.

Am anderen Ende der Meßwelle 3 ist ein erster Träger 8 angeordnet und fest mit dem Ende der Meßwelle 3 verbunden. Der erste Träger 8 trägt eine optische Detektoranordnung 9, die durch ein Fenster 10 in dem ersten Träger beleuchtet werden kann.

Links neben dem ersten Träger ist ein zweiter Träger 11 angeordnet, der drehfest mit der Hülse 5 verbunden ist. Der zweite Träger 11 trägt auf der dem ersten Träger 8 abgewandten Seite eine Schicht von Solarzellen 12. In dem zweiten Träger 11 und den Solarzellen 12 ist lediglich eine Blende 13 angebracht, die dem Fenster 10 gegenüber liegt.

Auf der dem ersten Träger 8 abgewandten Seite des zweiten Trägers ist in einem Gehäuse 14, in dem auch die Lenkwelle gelagert ist, eine Lichtquelle 15 angeordnet. Die Lichtquelle 15 ist ringförmig ausgestaltet und umgibt die Hülse 5. Sie beleuchtet dementsprechend die Solarzellen 12, was durch Pfeile 16 angedeutet sein soll. Die Solarzellen 12 sind über eine Leitung 17 mit einer Verarbeitungseinrichtung 18 verbunden, die eine nicht näher dargestellte Energieversorgungseinrichtung aufweist. Die Energieversorgungseinrichtung bereitet die von den Solarzellen 12 unter der Wirkung des Lichtes 16 erzeugte elektrische Energie auf, speichert sie gegebenenfalls zwischen und stabilisiert die Spannung.

Die Verarbeitungseinrichtung 18 weist einen Sender 19 auf, der als optischer Sender ausgebildet ist. Am Gehäuse ist ein Empfänger 20 oder noch besser mehrere Empfänger 20, die in Umfangsrichtung verteilt um die Hülse 5 herum angeordnet sind, vorgesehen.

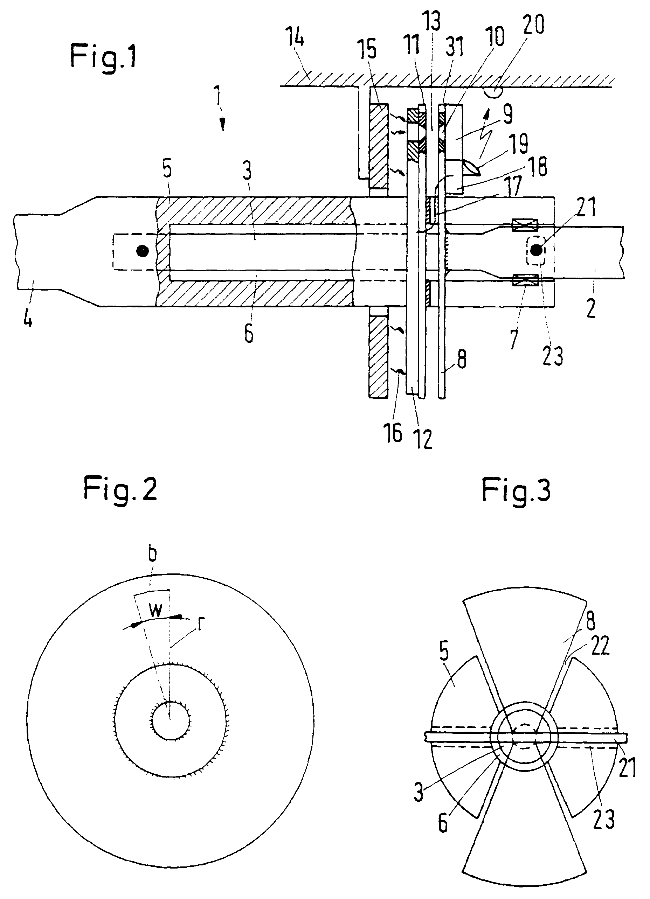

Anhand von Fig. 2 soll nun die Ermittlung eines auf die Lenkwelle wirkenden Drehmoments schematisch erläutert werden. Das Drehmoment M ist proportional zu einem Torsionswinkel w, d.h.

$$M = C \cdot w,$$

wobei C eine Konstante ist, die von der Meßwelle abhängt. Der Torsionswinkel w ergibt in Abhängigkeit von einem Radius r eine Meßstrecke b. Wenn nun die beiden Abschnitte 2,4 aufgrund eines herrschenden Drehmoments gegeneinander verdreht werden, dann kann man die Meßstrecke b messen. Da es sich in der Regel um kleine Winkel in der Größenordnung 1° und entsprechend kleine Wege der Größenordnung 0,1 mm handelt, ist es zweckmäßig, die Wegstreckenmessung optisch vorzunehmen.

Die Wegstreckenmessung kann nun dadurch vorgenommen werden, daß die Blende 13 gegenüber der Detektoranordnung 9 verschoben wird. Hierdurch können sich beispielsweise am Ausgang der Detektoranordnung 9 zwei sich gegenläufig ändernde Signale ergeben, die so ausgewertet werden können, wie dies beispielsweise in EP 0 555 987 B1 oder EP 0 765 795 A2 beschrieben ist. Es sind aber auch andere Auswertemöglichkeiten denkbar, beispielsweise mit Hilfe von Reflexstrukturen, mit Hilfe von Moiré-Mustern oder Interferometrie möglich. Für die Detektoranordnung kommen Lichtempfänger in Frage, die als Einzel- oder Zwillingselemente oder als Zeilensensoren (Diodenfelder, CCD) ausgebildet sein können.

Die für die optische Erfassung notwendige Beleuchtung stammt von der Lichtquelle 15. Die Lichtquelle 15 überträgt gleichzeitig die für die Auswertung der Signale notwendige Energie und zwar auf optische Weise. In ähnlicher Weise werden Meßsignale mit Hilfe des Senders 19 übertragen und zwar ebenfalls auf optische Weise. Hierbei ist im Grunde die einzige Bedingung, daß das optische Signal, das vom Sender 19 zu dem Empfänger 20 oder den Empfängern übertragen wird, die Information nicht in der Amplitude enthält. Denkbar sind beispielsweise frequenzmodulierte, frequenzanaloge, pulsweitenmodulierte oder Trägerfrequenz-Signale, es ist aber auch möglich, die Information digital zu übertragen, wenn auf der Welle ein A/D-Wandler zur Verfügung steht.

Wie dargestellt, wird die leitungslose Übertragungsstrecke zwischen dem Sender 19 und dem Empfänger 20 weitgehend vom ersten Träger abgeschattet, so daß die Lichtquelle 15 hier keine Störungen bewirken kann.

Die Hülse 5 ist mit dem Abschnitt 2 bzw. dem dortigen Ende der Meßwelle 3 auch noch mit Hilfe eines Stiftes 21 verbunden, der fest in die Lenkwelle eingesteckt ist und auch die Hülse 5 durchragt. Dies ist aus Fig. 3 erkennbar. Fig. 3 zeigt ebenfalls, daß der erste Träger 8 kreissegmentförmig ausgebildet ist. Im vorliegenden Ausführungsbeispiel wird er durch zwei Kreissegmente gebildet, die einander diametral gegenüber liegen. Der erste Träger 8 ist durch einen Schlitz 22 geführt, der so viel größer als der erste Träger 8 ist, daß sich die zulässigen Verwindungen zwischen Hülse 5 und Träger 8 einstellen können, ohne daß der Träger 8 an der Hülse 5 anschlägt.

Ferner ist erkennbar, daß die Öffnung 23 durch die der Stift 21 in der Hülse 5 geführt ist, ebenfalls größer als der Querschnitt des Stiftes 21 ist. Dementsprechend kann sich der Stift 21 in dieser Öffnung 23 bewegen.

Die Bewegung wird allerdings begrenzt, wenn das zwischen den beiden Abschnitten 2,4 herrschende Drehmoment einen Wert überschreitet, der zugelassen ist. In diesem Fall dient der Stift 21 mit der Hülse 5 zusammen als Drehmomentsicherung, um eine Beschädigung der Meßwelle 3 zu vermeiden.

Anstelle des dargestellten Stifts kann auch vorgesehen sein, daß die Meßwelle und die Hülse jeweils Zahnkränze oder andere Zahnstrukturen aufweisen, die auf Lücke ineinandergreifen und mit einem entsprechenden Spiel versehen sind, um so die angreifenden Kräfte über den gesamten Umfang aufzunehmen.

**Patentansprüche**

1. Drehmomentsensor mit einem Gehäuse, das eine Lichtquelle aufweist, und einer Meßwelle, die eine Signalgeberanordnung einer Drehwinkelertassungseinrichtung mit einer Verarbeitungseinrichtung aufweist, dadurch gekennzeichnet, daß die Drehwinkelerfassungseinrichtung (9, 13) gemeinsam mit der Meßwelle (3) gegenüber dem Gehäuse (14) drehbar angeordnet ist und die Verarbeitungseinrichtung (18) eine Energieversorgungseinrichtung aufweist.

2. Sensor nach Anspruch 1, dadurch gekennzeichnet, daß ein Ende der Meßwelle (3) mit einem ersten Träger (8) verbunden ist, der eine optische Detektoranordnung (9) aufweist, und das andere Ende der Meßwelle (3) mit einem zweiten Träger (11) verbunden ist, der eine Blendenanordnung (13) aufweist, wobei der zweite Träger (11) zwischen dem ersten Träger (8) und der Lichtquelle (15) angeordnet ist.

3. Sensor nach Anspruch 2, dadurch gekennzeichnet, daß der zweite Träger (11) auf seiner der Lichtquelle (15) zugewandten Seite eine photovoltaische Anordnung (12) aufweist.

4. Sensor nach Anspruch 3, dadurch gekennzeichnet, daß das Spektrum der Lichtquelle (15) an die Empfindlichkeit der photovoltaischen Anordnung (12) angepaßt ist.

5. Sensor nach einem der Ansprüche 2 bis 4, dadurch gekennzeichnet, daß die Elendenanordnung (13) durch mindestens eine Durchbrechung der photovoltaischen Anordnung (12) und ihres Trägers (11) gebildet ist.

6. Sensor nach einem der Ansprüche 1 bis 5, dadurch gekennzeichnet, daß die Verarbeitungseinrichtung (18) einen Sender (19) aufweist, der über eine leitungslose Strecke mit einem Empfänger (20) im Gehäuse (14) zusammenwirkt.

7. Sensor nach Anspruch 6, dadurch gekennzeichnet, daß die leitungslose Strecke als optische Übertragungsstrecke ausgebildet ist.

8. Sensor nach Anspruch 7, dadurch gekennzeichnet, daß die optische Übertragungsstrecke auf der der Lichtquelle (15) abgewandten Seite des ersten Trägers (8) angeordnet ist.

9. Sensor nach Anspruch 7 oder 8, dadurch gekennzeichnet, daß die optische Übertragungsstrecke mehrere um die Welle (3) herum verteilte Empfängerelemente (20) aufweist.

10. Sensor nach einem der Ansprüche 7 bis 9, dadurch gekennzeichnet, daß der Sender (19) ein frequenzanaloges, pulsweitenmoduliertes oder Trägerfrequenz-Signal oder ein anderes, amplitudenunabhängiges Signal aussendet.

11. Sensor nach einen der Ansprüche 1 bis 10, dadurch gekennzeichnet, daß die Lichtquelle getaktet arbeitet.

12. Sensor nach Anspruch 11, dadurch gekennzeichnet, daß die Lichtquelle (15) in einem Abschnitt einer jeden Periode kein Licht aussendet.

13. Sensor nach einem der Ansprüche 1 bis 12, dadurch gekennzeichnet, daß die Meßwelle (3) von einer Hohlwelle (5) umgeben ist, die einen der beiden Träger (11) trägt, wobei der andere Träger (8) kreissegmentförmig ausgebildet ist und durch einen entsprechenden Schlitz (22) in der Wand der Hohlwelle (5) ragt.

14. Sensor nach Anspruch 13, dadurch gekennzeichnet, daß durch das Ende der Meßwelle (3), das nicht mit der Hohlwelle (5) verbunden ist, ein Stift (21) geführt ist, der auch in die Hohlwelle (5) eingesteckt ist, wobei der Stift (21) in einem der beiden Teile Meßwelle (3) und Hohlwelle (5) gehalten ist und die Öffnung (23) im anderen der beiden Teile größer als der Querschnitt des Stiftes (21) ist.

EP 0 974 823 A2

Fig.1

Fig.2

Fig.3

6